# EUROPEAN PATENT APPLICATION

(11) **EP 4 643 981 A1**
(43) Date of publication of application: **05.11.2025**
(21) Application number: 23911292.3
(22) Date of filing: 15.09.2023
(51) Int. Cl.: B01D 61/48, C02F 1/44, C02F 1/469

(54) **ELECTRIC DEIONIZATION DEVICE AND METHOD FOR OPERATING THE SAME**

(30) Priority: 26.12.2022 JP 2022208258; 30.08.2023 JP 2023140124
(71) Applicant: Kurita Water Industries Ltd., Tokyo 164-0001 (JP)
(72) Inventor: TABEI, Rena, Tokyo 164-0001 (JP); ABE, Kouya, Tokyo 164-0001 (JP)
(74) Representative: TBK
(86) International application number: PCT/JP2023/033722
(87) International publication number: WO 2024/142508

(57) **Abstract**

In an electric deionization device 1, sub-blocks 3A-3F, in which a plurality of pairs of a desalination chamber and a concentration chamber are formed, are arranged side-by-side between frames 2, 2. Water supply ports 4A, 4B, in which is disposed a water supply line 4 through which water to be treated W1 is passed, are formed at both ends on the upper side of a cell of the sub-blocks 3A-3F. Concentrated water supply ports 6A, 6B, in which is disposed a concentrated water supply line 6 through which concentrated water W3 is passed to the concentration chambers, are formed at both ends on the lower side of the cell. The water to be treated W1 passes from the water supply ports 4A, 4B through the water supply line 4 and is supplied from the upper side of the desalination chambers, and then passes from the lower side of the desalination chambers through a treated water outflow line 5 and can be discharged from treated water outflow ports 5A, 5B. Further, the concentrated water W3 passes from the concentrated water supply ports 6A, 6B through the concentrated water supply line 6 and is supplied from the lower side of the concentration chambers, and then concentrated waste water W4 passes from the upper side of the concentration chambers through a concentrated waste water outflow line 7 and can be discharged from concentrated waste water outflow ports 7A, 7B. Due to this configuration, the electric deionization device can efficiently produce treated water with high water quality.

## Description

### Technical Field

The present invention relates to an electric deionization device and a method for operating the same, and particularly relates to an electric deionization device capable of efficiently producing treated water with high water quality, and a method for operating the same.

### Related Art

In an electric deionization device, generally, cation exchange membranes and anion exchange membranes are alternately disposed between a cathode and an anode, and desalination chambers and concentration chambers are formed by constructing compartments with these cation exchange membranes and anion exchange membranes, with ion exchange resin filled in the desalination chambers and the concentration chambers. The ion exchange membranes such as cation exchange membranes and anion exchange membranes may be heterogeneous membranes produced by adding binders such as polystyrene to powdered ion exchange resin, homogeneous membranes produced by polymerization of styrene-divinylbenzene or the like, as well as membranes produced by graft polymerization of various monomers having anion exchange or cation exchange functions.

Patent Literature 1 discloses a device having the configuration as shown in FIG. 3 and FIG. 4 as the electric deionization device.

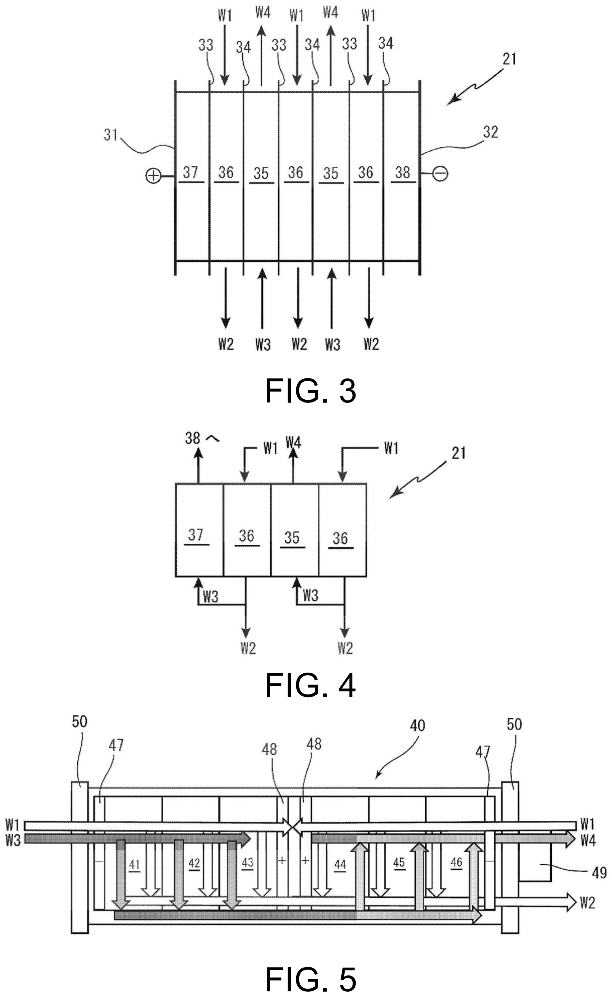

In FIG. 3, the electric deionization device 21 is formed by alternately arranging multiple anion exchange membranes 33 and cation exchange membranes 34 between electrodes (anode 31, cathode 32) to alternately form concentration chambers 35 and desalination chambers 36. The desalination chambers 36 are filled with ion exchangers (anion exchangers and cation exchangers) composed of ion exchange resin, ion exchange fibers, or graft exchangers in a mixed or multilayered state. Additionally, the concentration chambers 35, the anode chamber 37, and the cathode chamber 38 are also filled with ion exchangers.

This electric deionization device 21 is equipped with a water passing means (not shown) for passing water to be treated W1 through the desalination chambers 36 to extract treated water W2, and a concentrated water passing means (not shown) for passing concentrated water W3 through the concentration chambers 35. In this embodiment, the configuration is made so that concentrated water W3 is introduced into the concentration chambers 35 from the side closer to the extraction outlets of the desalination chambers 36 for treated water W2, and flows out from the side closer to the inlets of the desalination chambers 36. In other words, concentrated water W3 is introduced into the concentration chambers 35 in the opposite direction to the flow direction of water to be treated W1 in the desalination chambers 36, to discharge concentrated waste water W4. Then, it is described that water with a lower silica or boron concentration than the feed water (water to be treated W1) is used as this concentrated water W3, and is introduced into the concentration chambers from the side closer to the deionized water extraction outlets of the desalination chambers among the concentration chambers and flows out from the side closer to the raw water inlet of the desalination chambers among the concentration chambers.

As particularly shown in FIG. 4, it is described as a preferable aspect to use part of treated water W2 obtained from the desalination chambers 36 as concentrated water W3, thereby circulating concentrated waste water W4 with reduced ion concentration.

Such an electric deionization device is utilized as a pure water production device in various industries, for example, in semiconductor chip manufacturing processes, thermal or nuclear power plants, petrochemical plants, pharmaceutical manufacturing processes, etc.

Particularly, in the semiconductor market, the production water is required to have high water quality, and in many cases, treated water resistivity of 15 MΩ·cm or more and high boron and silica removal rates are necessary. In recent years, in addition to high-purity treated water quality, operating conditions that consider energy saving and water conservation are also required.

Additionally, as a general-purpose electric deionization device for semiconductor manufacturing processes, an IP-VNX-55EX-2 manufactured by Evoqua Water Technologies, LLC (558 Clark Road Tewksbury, Massachusetts 01876, USA) is commercially available. As shown in FIG. 5, this electric deionization device 40 includes sub-blocks 41 to 46 within frames 50. The sub-blocks 41 to 46 are formed with multiple pairs of desalination chambers and concentration chambers by alternately arranged cation exchange membranes CEM and anion exchange membranes AEM.

The sub-blocks 41 and 43 of this electric deionization device 40 include 17 pairs of desalination chambers and concentration chambers, and the sub-block 42 includes 16 such pairs. The sub-blocks 44 and 46 include 17 such pairs, and the sub-block 45 includes 16 such pairs. It should be noted that, in FIG. 5, "-" indicates a cathode chamber 47, and "+" indicates an anode chamber 48. Reference numeral 49 indicates a power supply box.

In a method for operating the electric deionization device 40 shown in FIG. 5, feed water (water to be treated) W1 and concentrated water W3 are supplied from the respective ports to the sub-blocks 41 to 43. Part of feed water W1 passes through the feed water path (upper head portion) of the sub-blocks 41 to 43, and is supplied to the feed water path (upper head portion) of the sub-blocks 44 to 46. This feed water passes through each desalination chamber of the sub-blocks 41 to 46, and is extracted as treated water W2 from the treated water extraction ports via the desalinated water collection path (lower head portion).

The concentrated water is supplied to the head portion (upper head portion) of the sub-blocks 41 to 43, passes through each concentration chamber of the sub-blocks 41 to 43, and is introduced from the concentrated water collection path (lower head portion) of the sub-blocks 41 to 43 to the concentrated water head portion (lower head portion) of the sub-blocks 44 to 46. The concentrated water is then passed through each concentration chamber of the sub-blocks 44 to 46, and is extracted as concentrated waste water W4 from the concentrated waste water extraction ports via the upper head portion of the concentration chambers of the sub-blocks 44 to 46. In other words, in the electric deionization device 40 shown in FIG. 5, feed water W1 flows downward and passes through all the desalination chambers. On the other hand, the water passing direction of concentrated water W3 is downward in the first half (sub-blocks 41, 42, and 43) and upward in the second half (sub-blocks 44, 45, and 46). By reversing the water passing direction of concentrated water W3 between the sub-blocks 41 to 43 and the sub-blocks 44 to 46 in this manner, the water usage for concentrated waste water W4 is reduced by half.

### Citation List

### Patent Literature

Patent Literature 1: Japanese Patent Application Laid-Open No. 2002-205069

### SUMMARY OF INVENTION

### Problems to be Solved by the Invention

However, in the electric deionization device 21 described in Patent Literature 1, while it is possible to prevent diffusion (reverse diffusion) from the concentration chamber 35 to the desalination chamber 36 due to the concentration difference of ionic components between treated water W2 and concentrated waste water W4 on the outlet side of the desalination chamber 36, thereby reducing silica and boron concentration in treated water W2, the amount of ions to be treated increases compared to the normal water passing system because the flow rate through the desalination chamber 36 is increased by the amount flowing through the concentration chamber 35. As a result, the load on the electric deionization device 21 increases. Therefore, while there is no problem when the boron concentration in feed water (water to be treated) W1 is low and can be sufficiently treated by the electric deionization device 21, there is a concern that when the boron concentration in feed water W1 increases, and cannot be sufficiently treated, which may lead to an increase in the boron concentration in treated water W2.

Moreover, according to the water passing method of the electric deionization device shown in FIG. 5, in the sub-blocks 41 to 43, the ion concentration difference between the lower portion of the desalination chamber and the lower portion of the concentration chamber becomes large. As a result, ions move from the concentration chamber to the desalination chamber due to concentration diffusion, leading to a problem of a decrease in the water quality of the treated water.

Therefore, it is considered to adopt the water passing method described in Patent Literature 1 for the electric deionization device shown in FIG. 5. However, in the electric deionization device shown in FIG. 5, the desalination chamber and the concentration chamber have parallel flow in the cell on the left side of the figure, while the desalination chamber and the concentration chamber pass water in counter-flow directions in the cell on the right side. Thus, it is difficult to apply this method.

The present invention has been made in view of the above problems, and aims to provide an electric deionization device capable of efficiently producing treated water with high water quality, and a method for operating the same.

### Means for Solving the Problems

To achieve the above, the present invention firstly provides an electric deionization device, including a cathode and an anode; a plurality of cation exchange membranes and anion exchange membranes disposed between the cathode and the anode; and a plurality of desalination chambers and concentration chambers partitioned by the cation exchange membranes and the anion exchange membranes, in which ion exchange resin is filled in the desalination chambers and the concentration chambers, and the electric deionization device has a means for passing water to be treated through the plurality of desalination chambers to extract deionized water, and a concentrated water passing means for passing concentrated water through the concentration chambers. Water to be treated inflow branch pipes branched sequentially from a supply line of water to be treated are respectively connected to one side of each of the desalination chambers while outflow pipes of treated water are respectively connected to the other side of each of the desalination chambers, so that the outflow pipes of treated water merge into an outflow line of treated water, and both sides of the supply line of water to be treated are open, so that the water to be treated is able to be supplied from both sides of the supply line of water to be treated. Concentrated water inflow branch pipes branched sequentially from a supply line of concentrated water are respectively connected to the other side of each of the concentration chambers while outflow pipes of concentrated water are respectively connected to one side of each of the concentration chambers, so that the outflow pipes of concentrated water merge into an outflow line of concentrated water, and both sides of the supply line of concentrated water are open, so that the concentrated water is able to be supplied from both sides of the supply line, and the same water as the water to be treated is able to be supplied as the concentrated water (Invention 1).

According to this invention (Invention 1), since the water to be treated, which is the feed water for the desalination chambers, is passed as the concentrated water of the electric deionization device, the flow rate of water passing through the desalination chambers can be reduced compared to the case of using treated water (desalinated water) as concentrated water. Therefore, there is no deterioration in water quality associated with an increase in the amount of treated water. Furthermore, since the concentrated water can be supplied from both sides of the supply line formed on both left and right sides of the cell, water can be passed through all concentration chambers in the opposite direction to the water passing direction of the water to be treated in the desalination chambers. This can prevent diffusion due to the concentration difference between the desalinated water and the concentrated water near the desalination chamber outlet, thereby improving the water quality of the treated water. The combined effect of these effects allows for the optimization of water quality in the electric deionization device.

In the above invention (Invention 1), it is preferable that a treated water flow rate of the electric deionization device is 5 m³/h to 15 m³/h (Invention 2).

According to this invention (Invention 2), in the electric deionization device, the amount of treated water does not increase compared to the case of using the treated water (desalinated water) from the desalination chambers as concentrated water, so there is no deterioration in water quality associated with this. However, for a small-scale electric deionization device with a treated water flow rate of 15 m³/h or less in the desalination chambers, the impact of the concentrated water on the water to be treated becomes more significant, making this invention particularly suitable.

In addition, the present invention secondly provides a method for operating an electric deionization device, including: a cathode and an anode; a plurality of cation exchange membranes and anion exchange membranes disposed between the cathode and the anode; and a plurality of desalination chambers and concentration chambers partitioned by the cation exchange membranes and the anion exchange membranes, in which ion exchange resin is filled in the desalination chambers and the concentration chambers, and the electric deionization device has a means for passing water to be treated through the plurality of desalination chambers to extract deionized water, and a concentrated water passing means for passing concentrated water through the concentration chambers. Water to be treated inflow branch pipes branched sequentially from a supply line of water to be treated are respectively connected to one side of each of the desalination chambers while outflow pipes of treated water are respectively connected to the other side of each of the desalination chambers, so that the outflow pipes of treated water merge into an outflow line of treated water, and both sides of the supply line of water to be treated are open. Concentrated water inflow branch pipes branched sequentially from a supply line of concentrated water are respectively connected to the other side of each of the concentration chambers while outflow pipes of concentrated waste water are respectively connected to one side of each of the concentration chambers, so that the outflow pipes of concentrated waste water merge into an outflow line of concentrated waste water, and both sides of the supply line of concentrated water are open. The method for operating the electric deionization device includes: supplying the water to be treated from both sides of the supply line, and extracting treated water from the outflow line; and supplying the same water as the water to be treated from both sides of the supply line of concentrated water, and discharging concentrated waste water from the outflow line of concentrated waste water (Invention 3).

According to this invention (Invention 3), since the water to be treated, which is the feed water for the desalination chambers, is passed as the concentrated water of the electric deionization device, the flow rate of water passing through the desalination chambers can be reduced compared to the case of using treated water (desalinated water) as concentrated water. Therefore, there is no deterioration in water quality associated with an increase in the amount of treated water. Furthermore, as the concentrated water is supplied from both sides of the supply line formed on both left and right sides of the cell, water can be passed through all concentration chambers in the opposite direction to the water passing direction of the water to be treated in the desalination chambers. This can prevent diffusion due to the concentration difference between the desalinated water and the concentrated water near the desalination chamber outlet, thereby improving the water quality of the treated water. The combined effect of these effects allows for the optimization of water quality in the electric deionization device.

In the above invention (Invention 3), it is preferable that a treated water flow rate of the electric deionization device is 5 m³/h to 15 m³/h (Invention 4).

According to this invention (Invention 4), in the electric deionization device, the amount of treated water does not increase compared to the case of using the treated water (desalinated water) from the desalination chambers as concentrated water, so there is no deterioration in water quality associated with this. However, for a small-scale electric deionization device with a treated water flow rate of 15 m³/h or less in the desalination chambers, the impact of the concentrated water on the water to be treated becomes more significant, making this invention particularly suitable.

In the above invention (Invention 4), it is preferable that a boron concentration of feed water of the water to be treated is 0.1 µg/L or more (Invention 5).

According to this invention (Invention 5), such water quality of the water to be treated tends to deteriorate easily as the treated water flow rate in the desalination chamber increases. However, by using the same water as the water to be treated for concentrated water and supplying the concentrated water from both sides of the supply line formed on both left and right sides of the cell, there is no need to increase the treated water flow rate in the desalination chamber compared to the case of using treated water from the desalination chamber as concentrated water. As a result, the water quality of the treated water can be improved.

In the above invention (Invention 4), it is preferable that a conductivity of the water to be treated is 0.1 mS/m to 1 mS/m (Invention 6).

According to this invention (Invention 6), by using the same water as the water to be treated for concentrated water and supplying the concentrated water from both sides of the supply line formed on both left and right sides of the cell, water can be passed through all concentration chambers in the opposite direction to the water passing direction of the water to be treated in the desalination chambers. This can prevent diffusion due to the concentration difference between the desalination chamber and the concentration chamber that occurs near the desalination chamber outlet, thereby improving the water quality of the treated water.

In the above inventions (Inventions 3 to 5), it is preferable that an inorganic carbonate concentration of the water to be treated is 50 µg/L to 1000 µg/L as C (Invention 7).

According to this invention (Invention 7), by using the same water as the water to be treated for concentrated water and supplying the concentrated water from both sides of the supply line formed on both left and right sides of the cell, water can be passed through all concentration chambers in the opposite direction to the water passing direction of the water to be treated in the desalination chambers. This can prevent diffusion due to the concentration difference between the desalination chamber and the concentration chamber that occurs near the desalination chamber outlet, thereby improving the water quality of the treated water.

### Effects of the Invention

The electric deionization device of the present invention has the flow direction of the water to be treated in the desalination chamber and the flow direction of the concentrated water to the concentration chamber in opposite directions, and furthermore, both sides of the supply line for the concentrated water are open, enabling the concentrated water to be supplied from both sides of this supply line, and enabling the supply of the water to be treated as concentrated water. Therefore, by passing the same water as the water to be treated, which is the feed water for the desalination chamber, as the concentrated water, it is possible to reduce the flow rate of water passing through the desalination chamber compared to the case of using treated water (desalinated water) as concentrated water. As a result, there is no deterioration in water quality associated with an increase in the amount of treated water. Moreover, since the concentrated water can be supplied from both sides of the supply line formed on both left and right sides of the cell, water can be passed through all concentration chambers in the opposite direction to the water passing direction of the water to be treated in the desalination chambers. This can prevent diffusion due to the concentration difference between the desalinated water and the concentrated water near the desalination chamber outlet, thereby improving the water quality of the treated water. The combined effect of these effects allows for the optimization of water quality in the electric deionization device.

### BRIEF DESCRIPTION OF DRAWINGS

[FIG. 1] is a schematic diagram showing the configuration of the electric deionization device according to the first embodiment of the present invention.
[FIG. 2] is a schematic diagram showing the configuration of the electric deionization device according to the second embodiment of the present invention.
[FIG. 3] is a schematic diagram showing the configuration of the conventional electric deionization device (Patent Literature 1).
[FIG. 4] is a schematic diagram showing the flow of water in the desalination chambers and the concentration chambers of the conventional electric deionization device (Patent Literature 1).
[FIG. 5] is a schematic diagram showing the configuration of the conventional (commercially available) electric deionization device.

### DESCRIPTION OF EMBODIMENTS

The electric deionization device of the present invention and the operating method using the same will be described below with reference to the attached figures.

### First Embodiment

### [Electric Deionization Device]

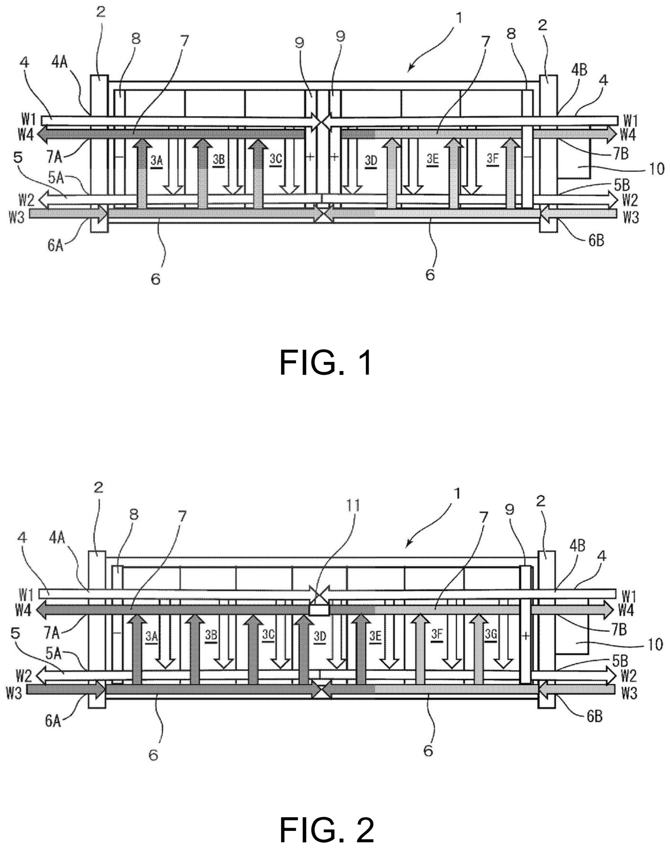

FIG. 1 shows the electric deionization device according to the first embodiment of the present invention. In FIG. 1, an electric deionization device 1 includes sub-blocks 3A to 3F arranged side-by-side between frames 2 and 2. Each of the sub-blocks 3A to 3F is formed with multiple pairs of desalination chambers (not shown) and concentration chambers (not shown) by alternately arranged cation exchange membranes CEM and anion exchange membranes AEM. These desalination chambers and concentration chambers are filled with ion exchange resin (for example, mixed resin of anion exchange resin and cation exchange resin).

At both ends on one side (upper side in the figure) of a cell where these sub-blocks 3A to 3F are connected in series, water supply ports 4A and 4B are formed to arrange a water supply line 4 for passing water to be treated W1 to the desalination chambers. At both ends on the other side (lower side in the figure) of the cell, treated water outflow ports 5A and 5B are formed to arrange a treated water outflow line 5 for discharging treated water W2 as deionized water treated in the desalination chambers. The water supply line 4 branches in each of the sub-blocks 3A to 3F and connects to the upper side of each desalination chamber as a water to be treated inflow branch pipe, while treated water outflow pipes are connected to the lower side of each desalination chamber, and these treated water outflow pipes merge into a treated water outflow line 5. This enables the supply of water to be treated W1 from the water supply ports 4A and 4B through the water supply line 4 from the upper side of each desalination chamber, and further enables the discharge from the lower side of each desalination chamber through the treated water outflow line 5 from the treated water outflow ports 5A and 5B.

In addition, at both ends on the lower side in the figure of the cell where the sub-blocks 3A to 3F are connected in series, concentrated water supply ports 6A and 6B are formed to arrange a concentrated water supply line 6 for passing concentrated water W3 as concentrated water to the concentration chambers. At both ends on the upper side in the figure of the cell, concentrated waste water outflow ports 7A and 7B are formed to arrange a concentrated waste water outflow line 7 for discharging concentrated waste water W4. The concentrated water supply line 6 branches in each of the sub-blocks 3A to 3F and connects to the lower side of each concentration chamber as a concentrated water inflow branch pipe, while concentrated waste water outflow pipes are connected to the upper side of each concentration chamber, and these concentrated waste water outflow pipes merge into the concentrated waste water outflow line 7. This enables the supply of concentrated water W3 from the concentrated water supply ports 6A and 6B through the concentrated water supply line 6 from the lower side of each concentration chamber, and further enables the discharge of concentrated waste water W4 from the upper side of each concentration chamber through the concentrated waste water outflow line 7 from the concentrated waste water outflow ports 7A and 7B.

In the electric deionization device 1 shown in FIG. 1, the sub-blocks 3A, 3C, 3D, and 3F includes multiple pairs (for example, 17 pairs) of desalination chambers and concentration chambers, and the sub-blocks 3B and 3E include one fewer pair (for example, 16 pairs) of desalination chambers and concentration chambers. In FIG. 1, cathode chambers (cathodes) 8 are disposed at both left and right ends between the frames 2 and 2, and a pair of anode chambers (anodes) 9 are disposed in the center, forming a two-block structure with the sub-blocks 3A, 3B, 3C and the sub-blocks 3D, 3E, 3F. It should be noted that reference numeral 10 indicates a power supply box.

In the electric deionization device 1 of this embodiment as described above, the same water as water to be treated W1 is used as concentrated water W3. Additionally, it is preferable that the flow rate of treated water W2 (desalination chamber flow rate) of the sub-blocks 3A to 3F is 5 m³/h to 15 m³/h. If the flow rate of treated water W2 (desalination chamber flow rate) is less than 5 m³/h, the amount of treated water is too small to be practical, while if the flow rate exceeds 15 m³/h, the flow rate of treated water W2 is high, and the benefits compared to using treated water W2 as concentrated water W3 are not sufficiently obtained. Furthermore, the flow rate of concentrated waste water W4 with respect to the feed water flow rate (flow rate of treated water W2 + flow rate of concentrated waste water W4) is preferably 2.5 volume% to 10 volume%, particularly about 5 volume%. If the flow rate of concentrated waste water W4 is less than 2.5 volume%, concentrated waste water W4 is too small, causing the ion concentration flowing in from the desalination chamber to become high, and reverse diffusion cannot be ignored, easily leading to a decrease in the water quality of treated water W2. On the other hand, if the flow rate exceeds 10 volume%, the amount of concentrated water W3 becomes large, and using water to be treated W1 as concentrated water W3 results in an excessive amount of feed water, which is not desirable.

### [Method for Operating Electric Deionization Device]

The following describes a method for operating an electric deionization device using the electric deionization device 1 with the configuration as described above.

First, water to be treated W1 is supplied from the upper side to the desalination chambers of the sub-blocks 3A to 3F through the water supply line 4 from the water supply ports 4A and 4B, while concentrated water W3 is supplied from the lower side to each concentration chamber through the concentrated water supply line 6 from the concentrated water supply ports 6A and 6B. Water to be treated W1 passes through the desalination chambers of the sub-blocks 3A to 3F from the upper side to the lower side in the figure, and is discharged from the treated water outflow ports 5A and 5B through the treated water outflow line 5 from each treated water outflow pipe. Additionally, concentrated water W3 passes through the concentration chambers of the sub-blocks 3A to 3F from the lower side to the upper side in the figure, and is discharged from the concentrated waste water outflow ports 7A and 7B through the concentrated waste water outflow line 7 from each concentrated waste water outflow pipe. By supplying water to be treated W1 and concentrated water W3 from both sides of the cell in this manner, it is possible to homogenize the water amount and water pressure of the feed water of the sub-blocks 3A to 3F, and stabilize the water quality of treated water W2.

The water flow SV in the desalination chamber is preferably 70/h to 150/h, particularly 100/h to 120/h. The water flow SV in the concentration chamber is preferably 5/h to 50/h, particularly 10/h to 25/h. The recovery rate is preferably 80% to 99%, particularly 90% to 95%. The applied current is preferably 0.15 A/(m³/h) to 2.30 A/(m³/h), particularly 0.7 A/(m³/h) to 1.2 A/(m³/h).

In this embodiment, water to be treated W1 is passed through all desalination chambers in a downward flow, while concentrated water W3 is passed through all concentration chambers in an upward flow. Also, the same water as water to be treated W1 is supplied as concentrated water W3.

The conductivity of this water to be treated W1 (feed water) is preferably 0.1 mS/m to 1 mS/m, particularly 0.1 mS/m to 0.5 mS/m. If the conductivity of water to be treated W1 (feed water) exceeds 1 mS/m, reverse diffusion from the concentration chamber to the desalination chamber is more likely to occur, which is not desirable as it tends to cause a decrease in the water quality of treated water W2.

Furthermore, this embodiment can be suitably applied in cases where the boron concentration of water to be treated W1 (feed water) is 0.1 µg/L or more. When water to be treated W1 with a boron concentration of 0.1 µg/L or more is supplied to the desalination chamber, an increase in the amount of treated water tends to cause a decrease in water quality. However, by supplying the same water as water to be treated W1 as concentrated water W3, as in this embodiment, it is not necessary to increase the amount of treated water in the desalination chamber compared to the case where treated water W2 from the desalination chamber is used as concentrated water W3. Therefore, the water quality of the treated water can be improved. It should be noted that maintaining the boron concentration of water to be treated W1 (feed water) below 0.1 µg/L is not practical, as it would require treatment with a certain level of water treatment facilities.

Moreover, the inorganic carbonate concentration of water to be treated W1 (feed water) is preferably 50 µg/L to 1000 µg/L as C. If the inorganic carbonate concentration of water to be treated W1 (feed water) exceeds 1000 µg/L as C, the carbonate concentration becomes too high, making reverse diffusion from the concentration chamber to the desalination chamber more likely to occur. This not only tends to cause a decrease in the water quality of the treated water W2, but also makes it easier for carbonate salts such as calcium carbonate to precipitate on electrodes, etc.

As the water to be treated W1 (feed water) described above, it is suitable to use water that has been treated by a water treatment device including a reverse osmosis membrane device after applying pretreatment to industrial water, city water, well water, etc., as necessary. It is preferable to appropriately sense the conductivity, boron concentration, and inorganic carbonate concentration of the treated water from this reverse osmosis membrane device and confirm that they are within the aforementioned ranges for use.

### Second Embodiment

### [Electric Deionization Device]

FIG. 2 shows the electric deionization device according to the second embodiment of the present invention. The electric deionization device of this embodiment has basically the same configuration as the aforementioned first embodiment, so the same reference numerals are assigned to the same components and detailed descriptions are omitted. In FIG. 2, the electric deionization device 1 includes sub-blocks 3A to 3G arranged side-by-side between frames 2 and 2. Each of the sub-blocks 3A to 3G is formed with multiple pairs of desalination chambers (not shown) and concentration chambers (not shown) by alternately arranged cation exchange membranes CEM and anion exchange membranes AEM. These desalination chambers and concentration chambers are filled with ion exchange resin (for example, mixed resin of anion exchange resin and cation exchange resin).

At both ends on one side (upper side in the figure) of the cell where these sub-blocks 3A to 3G are connected in series, water supply ports 4A and 4B are formed to arrange a water supply line 4 for passing water to be treated W1 to the desalination chambers. At both ends on the other side (lower side in the figure) of the cell, treated water outflow ports 5A and 5B are formed to arrange a treated water outflow line 5 for discharging treated water W2 as deionized water treated in the desalination chambers. The water supply line 4 branches in each of the sub-blocks 3A to 3G and connects to the upper side of each desalination chamber as a water to be treated inflow branch pipe, while treated water outflow pipes are connected to the lower side of each desalination chamber, and these treated water outflow pipes merge into a treated water outflow line 5. This enables the supply of water to be treated W1 from the water supply ports 4A and 4B through the water supply line 4 from the upper side of each desalination chamber, and further enables the discharge from the lower side of each desalination chamber through the treated water outflow line 5 from the treated water outflow ports 5A and 5B.

In addition, at both ends on the lower side in the figure of the cell where the sub-blocks 3A to 3G are connected in series, concentrated water supply ports 6A and 6B are formed to arrange a concentrated water supply line 6 for passing concentrated water W3 as concentrated water to the concentration chambers. At both ends on the upper side in the figure of the cell, concentrated waste water outflow ports 7A and 7B are formed to arrange a concentrated waste water outflow line 7 for discharging concentrated waste water W4. The concentrated water supply line 6 branches in each of the sub-blocks 3A to 3G and connects to the lower side of each concentration chamber as a concentrated water inflow branch pipe, while concentrated waste water outflow pipes are connected to the upper side of each concentration chamber, and these concentrated waste water outflow pipes merge into the concentrated waste water outflow line 7. This enables the supply of concentrated water W3 from the concentrated water supply ports 6A and 6B through the concentrated water supply line 6 from the lower side of each concentration chamber, and further enables the discharge from the upper side of each concentration chamber through the concentrated waste water outflow line 7 from the concentrated waste water outflow ports 7A and 7B.

Further, in this embodiment, a cathode chamber (cathode) 8 is disposed on the left end side between the frames 2 and 2 in the figure, while an anode chamber (anode) 9 is provided on the right end side, forming a single block configuration of the sub-blocks 3A to 3G. The concentrated waste water outflow line 7 is provided with a closure plate 11 in the middle portion so that the flow in the concentrated waste water outflow line 7 is divided into the concentrated waste water outflow ports 7A and 7B. It should be noted that reference numeral 10 indicates a power supply box.

In the electric deionization device 1 of this embodiment as described above, the same water as water to be treated W1 is used as concentrated water W3. In addition, it is preferable that the flow rate of treated water W2 (desalination chamber flow rate) of the sub-blocks 3A to 3G is 5 m³/h to 20 m³/h. If the flow rate of treated water W2 (desalination chamber flow rate) is less than 5 m³/h, the amount of treated water is too small to be practical, while if the flow rate exceeds 20 m³/h, the flow rate of treated water W2 is high, and the benefits compared to using treated water W2 as concentrated water W3 are not sufficiently obtained. Furthermore, the flow rate of concentrated waste water W4 with respect to the feed water flow rate (flow rate of treated water W2 + flow rate of concentrated waste water W4) is preferably 2.5 volume% to 10 volume%, particularly about 5 volume%. If the flow rate of concentrated waste water W4 is less than 2.5 volume%, concentrated waste water W4 is too small, causing the ion concentration flowing in from the desalination chamber to become high, and reverse diffusion cannot be ignored, easily leading to a decrease in the water quality of treated water W2. On the other hand, if the flow rate exceeds 10 volume%, the amount of concentrated water W3 becomes large, and using water to be treated W1 as concentrated water W3 results in an excessive amount of feed water, which is not desirable.

By adopting a single block configuration with the cathode 8 on the left end side and the anode 9 on the right end side as in this embodiment, the number of anode chambers and cathode chambers between the frames 2 and 2 is reduced compared to the case where a pair of anode chambers (anodes) 9 are disposed in the center as in the first embodiment. This can increase the number of sub-blocks 3A..., so the flow rate of treated water W2 (desalination chamber flow rate) is made higher than in the first embodiment. On the other hand, because the distance between the cathode chamber (cathode) 8 and the anode chamber (anode) 9 becomes longer, it is necessary to apply a higher voltage, particularly about twice or more, than in the first embodiment, and the current amount also increases and the power supply conditions vary. Nevertheless, other aspects of the operating method may be almost the same as those in the aforementioned first embodiment.

The electric deionization device of the present invention and the method for operating the same have been described above with reference to the attached figures, but the present invention is not limited to the above-described embodiments, and various modifications are possible. For example, there are six sub-blocks in FIG. 1, and there are seven sub-blocks in FIG. 2, but the present invention is not limited thereto, and there may be about 1 to 12 sub-blocks. Additionally, the number of pairs of desalination chambers and concentration chambers in one sub-block may be about 1 to 100 pairs. Furthermore, in this embodiment, treated water W2 or concentrated waste water W4 is extracted from both sides of the cell, but treated water W2 or concentrated waste water W4 may be extracted from either side.

### Examples

The present invention is specifically described below with reference to examples and comparative examples, but the present invention is not limited to the following examples.

### [Example 1]

An IP-VNX55EX-2 manufactured by Evoqua Water Technologies, LLC was used as the electric deionization device, and treated water was obtained by passing feed water and concentrated waste water according to FIG. 1. The resistivity and boron concentration of this treated water were measured. The results are shown in Table 1.

In Example 1, other conditions were set as follows.
Membrane area: 0.06 m²
Desalination chamber thickness: 9 mm
Concentration chamber thickness: 4 mm
Desalination chamber flow rate: 10.3 m³/h
Concentrated water: The same water as the feed water to the desalination chamber was passed through
Concentration chamber flow rate: 0.50 m³/h
Recovery rate: 95.4%
Operating current value: 10 A
Current density: 0.86 A/(m³/h)
Feed water boron concentration: 1 µg/L to 3 µg/L
Feed water conductivity: 0.1 mS/m to 0.2 mS/m
Feed water inorganic carbon concentration: concentration: 130 µg/L to 160 µg/L as C

### [Comparative Example 1]

In Comparative Example 1, the treated water from the desalination chamber was passed through as concentrated water to obtain treated water. The resistivity and boron concentration of this treated water were measured. The results are shown together in Table 1.

In Comparative Example 1, other conditions were set as follows.
Membrane area: 0.06 m²
Desalination chamber thickness: 9 mm
Concentration chamber thickness: 4 mm
Desalination chamber flow rate: 11.6 m³/h
Concentrated water: Treated water from the desalination chamber was passed through
Concentration chamber flow rate: 0.56 m³/h
Recovery rate: 95.1%
Operating current value: 10 A
Current density: 0.86 A/(m³/h)
Feed water boron concentration: 1 µg/L to 3 µg/L
Feed water conductivity: 0.1 mS/m to 0.2 mS/m
Feed water inorganic carbon concentration: concentration: 130 µg/L to 160 µg/L as C

**[Table 1]**

| | Example 1 | Comparative Example 1 |
|---|---|---|
| Treated water boron concentration [µg/L] | 0.03 | 0.05 |
| Treated water resistivity [MΩ·cm] | 18.1 | 18.1 |

As evident from Table 1, although the resistivity of the treated water in Example 1 and Comparative Example 1 was the same, the boron concentration of the treated water was lower in Example 1. From this result, it can be seen that in the case where the feed water quality is within a specific range, the system of Example 1, in which the same water as the feed water is passed through the concentration chamber in a counter-flow direction to the water to be treated in the desalination chamber, is more effective for boron removal than the system of Comparative Example 1, in which desalinated water (treated water) is passed in a counter-flow direction through the concentration chamber. Here, the conditions for the system of counter-flow of feed water to be effective are considered to be: the boron concentration is at or above a certain level (a concentration that cannot be sufficiently treated by the system of counter-flow of treated water), and the ion concentration of the feed water is within a certain range (if the ion concentration of the feed water becomes high, the effect of concentration diffusion in the lower portion of the desalination chamber becomes significant). It is inferred to be particularly effective in a small-scale electric deionization device with a desalination chamber flow rate of 15 m³/h or less.

### [Example 2]

An IP-LXM4X-4 manufactured by Evoqua Water Technologies, LLC was used as the electric deionization device, and treated water was obtained by passing feed water and concentrated waste water according to FIG. 1. The resistivity and boron concentration of this treated water were measured. The results are shown in Table 2.

In Example Comparative Example 2, the other conditions were set as follows.
Desalination chamber flow rate: 4.7 L/min
Concentrated water: The same water as the feed water to the desalination chamber was passed through
Concentration chamber flow rate: 1.0 L/min
Recovery rate: 82%
Feed water boron concentration: 1 µg/L
Feed water conductivity: 1.2 mS/m to 1.4 mS/m
Feed water inorganic carbon concentration: concentration: 6 mg/L as C

### [Example 3]

In Example 2, treated water was obtained in the same manner except for increasing the desalination chamber flow rate. The resistivity and boron concentration of this treated water were measured. The results are shown together in Table 2.

In Comparative Example 3, other conditions were set as follows.
Desalination chamber flow rate: 5.7 L/min
Concentrated water: The same water as the feed water to the desalination chamber was passed through
Concentration chamber flow rate: 1.0 L/min
Recovery rate: 82%
Feed water boron concentration: 1 µg/L
Feed water conductivity: 1.2 mS/m to 1.4 mS/m
Feed water inorganic carbon concentration: concentration: 6 mg/L as C

**[Table 2]**

| | Example 2 | Example 3 |
|---|---|---|
| Treated water boron concentration [µg/L] | 0.03 | 0.08 |
| Treated water resistivity [MΩ·cm] | 17.2 | 17.7 |

As evident from Table 2, under the feed water conditions of this experimental example, it can be seen that Example 2 has a lower boron concentration and lower resistivity. From this, it is inferred that reducing the desalination chamber flow rate is effective for improving boron removal performance. In addition, it was shown that when water with a high ion concentration (especially inorganic carbon) is used as the concentrated water passed in a counter-flow direction to the desalination chamber, diffusion due to the concentration difference occurs in the lower portion of the desalination chamber, resulting in a decrease in the resistivity of the treated water. Reference Signs List

1 Electric deionization device
2 Frame
3A to 3F Sub-block
4 Water supply line
4A, 4B Water supply port
5 Treated water outflow line
5A, 5B Treated water outflow port
6 Concentrated water supply line
6A, 6B Concentrated water supply port
7 Concentrated waste water outflow line
7A Concentrated waste water outflow port
8 Cathode chamber
9 Anode chamber
10 Power supply box
11 Closure plate
W1 Water to be treated (feed water)
W2 Treated water
W3 Concentrated water
W4 Concentrated waste water

## Claims

1. An electric deionization device, comprising: a cathode and an anode; a plurality of cation exchange membranes and anion exchange membranes disposed between the cathode and the anode; and a plurality of desalination chambers and concentration chambers partitioned by the cation exchange membranes and the anion exchange membranes, wherein ion exchange resin is filled in the desalination chambers and the concentration chambers, and the electric deionization device having a means for passing water to be treated through the plurality of desalination chambers to extract deionized water, and a concentrated water passing means for passing concentrated water through the concentration chambers,
wherein water to be treated inflow branch pipes branched sequentially from a supply line of water to be treated are respectively connected to one side of each of the desalination chambers while outflow pipes of treated water are respectively connected to the other side of each of the desalination chambers, so that the outflow pipes of treated water merge into an outflow line of treated water, and both sides of the supply line of water to be treated are open, so that the water to be treated is able to be supplied from both sides of the supply line of water to be treated,
wherein concentrated water inflow branch pipes branched sequentially from a supply line of concentrated water are respectively connected to the other side of each of the concentration chambers while outflow pipes of concentrated waste water are respectively connected to one side of each of the concentration chambers, so that the outflow pipes of concentrated waste water merge into an outflow line of concentrated waste water, and both sides of the supply line of concentrated water are open, so that the concentrated water is able to be supplied from both sides of the supply line, and
wherein the same water as the water to be treated is able to be supplied as the concentrated water.

2. The electric deionization device according to claim 1, wherein a treated water flow rate of the electric deionization device is 5 m³/h to 15 m³/h.

3. A method for operating an electric deionization device, comprising: a cathode and an anode; a plurality of cation exchange membranes and anion exchange membranes disposed between the cathode and the anode; and a plurality of desalination chambers and concentration chambers partitioned by the cation exchange membranes and the anion exchange membranes, wherein ion exchange resin is filled in the desalination chambers and the concentration chambers, and the electric deionization device having a means for passing water to be treated through the plurality of desalination chambers to extract deionized water, and a concentrated water passing means for passing concentrated water through the concentration chambers, wherein water to be treated inflow branch pipes branched sequentially from a supply line of water to be treated are respectively connected to one side of each of the desalination chambers while outflow pipes of treated water are respectively connected to the other side of each of the desalination chambers, so that the outflow pipes of treated water merge into an outflow line of treated water, and both sides of the supply line of water to be treated are open, wherein concentrated water inflow branch pipes branched sequentially from a supply line of concentrated water are respectively connected to the other side of each of the concentration chambers while outflow pipes of concentrated waste water are respectively connected to one side of each of the concentration chambers, so that the outflow pipes of concentrated waste water merge into an outflow line of concentrated waste water, and both sides of the supply line of concentrated water are open, the method for operating the electric deionization device comprising:
supplying the same water as the water to be treated from both sides of the supply line, and extracting treated water from the outflow line; and
supplying the water to be treated from both sides of the supply line of concentrated water, and discharging concentrated waste water from the outflow line of concentrated waste water.

4. The method for operating the electric deionization device according to claim 3, wherein a treated water flow rate of the electric deionization device is 5 m³/h to 15 m³/h.

5. The method for operating the electric deionization device according to claim 4, wherein a boron concentration of feed water of the water to be treated is 0.1 µg/L or more.

6. The method for operating the electric deionization device according to claim 4, wherein a conductivity of the water to be treated is 0.1 mS/m to 1 mS/m.

7. The method for operating the electric deionization device according to any one of claims 3 to 6, wherein an inorganic carbonate concentration of the water to be treated is 50 µg/L to 1000 µg/L as C.
